Europäisches Patentamt

European Patent Office

Office européen des brevets

(11) Publication number: **0 184 848 B1**

# EUROPEAN PATENT SPECIFICATION

(45) Date of publication of patent specification: **29.01.92** (51) Int. Cl.⁵: **F16F 3/10, B60G 11/52**

(21) Application number: **85115879.0**

(22) Date of filing: **12.12.85**

(54) **Composite spring.**

(30) Priority: **12.12.84 US 680841**

(43) Date of publication of application:
**18.06.86 Bulletin  86/25**

(45) Publication of the grant of the patent:
**29.01.92 Bulletin  92/05**

(84) Designated Contracting States:
**AT BE CH DE FR GB IT LI LU NL SE**

(56) References cited:
EP-A- 0 045 497      DE-C- 841 533
GB-A- 940 684       US-A- 1 928 526
US-A- 2 605 099     US-A- 2 822 165
US-A- 4 109 899

PATENT ABSTRACTS OF JAPAN,vol. 1, no.82,
page 1705 M-77, 29th July 1977; & JP-A-52
24676 (KURASHIKI KAKO) 24-02-1977

idem

(73) Proprietor: **The Paton Corporation**
**1218 Third Avenue**
**Seattle, Washington 98101(US)**

Proprietor: **Stevenson, Andrew**
**24 Desborough Close**
**Hertford SG14 3EG(GB)**

(72) Inventor: **Stevenson, Andrew**
**24 Desborough Close**
**Hertford England SG14 3EG(GB)**

(74) Representative: **Baillie, Iain Cameron et al**
**c/o Ladas & Parry, Altheimer Eck 2**
**W-8000 München 2(DE)**

## Description

### Background of the Invention

The present invention relates to composite springs and, more particularly, to composite springs made up of natural rubber or other elastomer in combination with a coil spring or other reinforcement. As used herein, the term "stiff" refers to those portions of the force versus deflection curve of the composite spring that are of relatively high spring rate, whether constant slope or generally rising rate and is characteristic of progressively increasing resistance to compressive deformation. The term "soft" refers to and is characteristic of relatively lower spring rate or less resistance to compressive deformation, whether increasing, decreasing or none at all.

In the past, composite springs of this type have provided force/deflection curves in which the spring is soft near the middle of the curve and is stiff at each end. This result is obtained by controlling deformation of the elastomer spring element under certain conditions in which it is deformable according to different but essentially stable characteristics. One example of such a composite spring is found in the United States Patent 2,605,099 by Brown. This composite spring is made up of a rubber envelope that has an undulatory wall section reinforced by and bonded to a steel spring. Another generally similar composite spring is found in United States Patent 2,822,165 by Boschi.

Other references of note are Japanese Patent No. 52-24676 to Ozaki. This patent discloses a composite spring, comprising a coil spring embedded in a tubular elastomeric body. The elastomeric body of said composite spring has an outer wall having a generally straight sided longitudinal profile and, under zero columnar deflection of the coil spring, a matching inner surface. The coil spring, embedded in said composite spring for controlling the compressive deformation, is located closer to said inner wall than to said outer wall and the stability factor S of the composite spring is such that

$$\frac{t}{h} = \frac{R - r}{H/n} = \frac{(R - r)n}{H} = 25,$$

wherein $1 > \frac{t}{h} \geq 0{,}5$ and $0{,}5 > S \geq 0{,}25$, and where

H = the total axial length of the body;
n = the total number of coils of the coil spring;
h = $\frac{H}{u}$ ;
r = the internal radius of the body;
R = the external radius of the body; and
t = (R-r) = the wall thickness of the body.

German Patent 841,533 to Tornax Fahrzeug and Apparate-Bau, this patent discloses a spring comprised of an elongated tubular elastomeric body with the standard coil spring placed therearound. Symmetric bulging instability occurs sequentially at a plurality of locations spaced apart along the length of the body under a predetermined axial load condition. British Patent No. 940,684 to Societe Luxembourgeoise de Brevets et de Participations discloses a spring with similar capabilities as that disclosed in the German reference. This reference, though, discloses the rubber spring in a paraboloidal body having a bellows-like portion. U.S. Patent No. 4,109,899 to Takatsu discloses a centrally located spring with a symmetric-bulging instability.

The principle drawback of these composite springs is that the soft region of the force/deflection curve, if any, is of very limited duration. This is unsatisfactory in some applications in which it is desirable to have a soft region of extended duration. One such application is for vehicular suspension systems and, in particular, suspension systems for automotive vehicles. This is so because ride comfort often is associated with the ride characteristics that are derived from the soft region of the force/deflection curve of the suspension springs.

### Summary of the Invention

Herein disclosed is:
a composite spring having an elongated, generally tubular, elastomeric body with an outer wall having a generally straight sided longitudinal profile and a matching inner surface under zero columnar deflection, and a coil spring embedded in the body between the outer wall and the inner surface, but closer to said inner wall than to said outer wall, for controlling compression deformation of the body, the composite spring being characterized by a force vs. deflection curve with a first constant rate region which persists for about the initial 20% of the columnar deflection, a rising rate region which persists for about the last 40% of the columnar deflection, and an intermediate plateau region, the plateau region persisting for a substantial portion of the columnar deflection as the spring bulges through the occurrence of a series of symmetric bulging instabilities at a plurality of locations spaced apart along the length of the body under a predetermined axial load condition, and wherein:

S = the stability factor of the spring
E = the reinforcing efficiency factor of the spring
H = total axial length of the body,
n = the total number of coils of the coil spring,

r = the internal radius of the body,
R = the external radius of the body,
(R - r) = the wall thickness of the body, and
t = the wire diameter of the coils of the coil spring,

are such that

$$\frac{(R - r)n}{2H}$$

is between 0.05 and 0.8 = 5 and such that

$$\frac{(R - r)}{.t}$$

is between 0.05 and 3 = E.

More succinctly, the present invention provides a spring comprising an elongated tubular elastomeric body and means operatively associated with the body for controlling deformation of the body such that a symmetric bulging instability occurs sequentially at a plurality of locations spaced apart along the length of the body under a predetermined axial load condition.

Thus, the present invention provides a composite spring having: a force/deflection curve with a "soft" region of extended duration; a force/deflection curve which is controllable to provide selected "stiff" and "soft" regions in accordance with specific requirements, particularly the provision of "soft" load bearing characteristics over an extended deflection range at a predetermined load; and a composite spring that is "tunable" so that it can be adapted easily to the force, deflection and other requirements of specific applications.

The features, objects and advantages of the present invention will become apparent from detailed description and the claims to follow, taken in conjunction with the accompanying drawings in which like parts bear like reference numerals.

Brief Description of the Drawings

Fig. 1 is a graph of force vs. deflection of one presently preferred embodiment of the composite spring of this invention;
Fig. 2 is a side elevation, partially in longitudinal section, of one presently preferred embodiment of the composite spring of this invention, depicting it in its relaxed (no load) position;
Fig. 3 is a side elevation generally similar to Fig. 2, depicting the Fig. 2 spring under axial load during the formation of symmetric bulging instability;
Fig. 4 is a side elevation generally similar to Fig. 2, depicting the Fig. 2 spring under axial load at the completion of the formation of symmetric bulging instability;
Fig. 5 is a longitudinal section of one intracoil segment of the Fig. 2 spring, depicting the manner in and the extent to which its inner and outer walls bulge under axial load;
Fig. 6 is a graph of force vs. deflection of a Fig. 5 segment;
Fig. 7 is a graph of force vs. deflection of five Fig. 5 segments; and
Fig. 8 is a graph of force vs. deflection of a first exemplary embodiment of the Fig. 2 spring.

Detailed Description of the Drawings

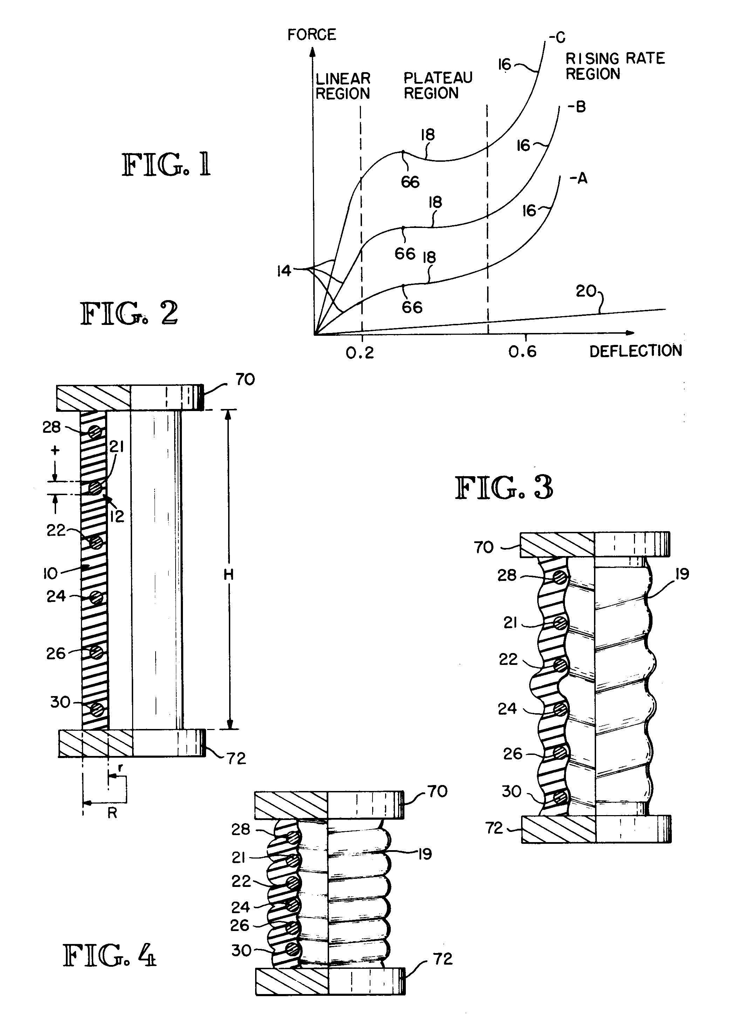

Referring to Fig. 2, one presently preferred embodiment of the composite spring of this invention is comprised of a tubular elastomeric body 10 and reinforcement means in the form of a coil spring 12 embedded in and bonded to the body for controlling deformation of the body such that the spring's force/deflection curve has two stiff regions, each characterized by essentially stable compression of the body, and an intermediate soft region characterized by unstable but symmetric bulging of the body.

Referring to Fig. 1, a typical force/deflection curve such as that just described includes a lower stiff region 14 in which stiffness is proportional to the shear modulus of the material forming body 10. In this region, essentially only uniaxial compression of the body occurs, giving rise to a generally constant slope curve approximating a linear spring rate. The force/deflection curve further includes an upper stiff region 16 in which stiffness is proportional to the shear modulus, but also is influenced by other factors, as will be described. In this region the body is under compression but, unlike region 14, the spring rate is of rising rate. In both regions 14 and 16, however, the body is deformed under conditions of essentially stable compression.

This invention stems from the discovery that, by causing instead of preventing instability, an intermediate soft region 18 (Fig. 1) of extended duration may be obtained, provided the instability is controlled so that it is localized and symmetric; that is, so that the body does not undergo columnar or other asymmetric buckling. (The terms "symmetric" and "asymmetric" have as a reference the longitudinal axis of the body 10). This control is accomplished by the coil spring 12. Being embedded in and bonded to the body 10 this spring restrains the cylindrical body wall from bulging along a helical path 19 (Figs. 3 and 4) that coincides with the individual coils of spring 2. The body is free to bulge laterally, however, in the axial spaces between adjacent convolutions of path 19 body (or between the individual coils of spring 12) at the intervals corresponding to the pitch of spring 12. Thus, the composite spring appears as a rubber coil spring, in which each individual "coil" is formed by one of these lateral bulges.

In its undeflected state, the composite spring of this invention has a simple cylindrical wall form that appears rectilinear in longitudinal section, as shown (Fig. 2). As a columnar or axial load is applied to body 10, uniaxial compression occurs until the body has been deflected about twenty percent of its unloaded length, or about 0.2H (Fig. 1). It is at this deflection that local symmetric bulging instability begins to appear in sequence between adjacent coils of spring 12. The force/deflection curve has by now progressed upward along and through region 14 and is entering region 18. As depicted in Figs. 1 and 3, as deflection continues beyond about 0.2H, this symmetric bulging instability appears as lateral outward bulging between adjacent coils of spring 12, first near the middle of body 10, as shown (Fig. 3) and subsequently between other adjacent coils. As a consequence, the external surface of the composite spring increasingly acquires an undulatory configuration. The duration of region 18 corresponds to the range of deflection during which the symmetric bulging instability grows toward and eventually assumes a continuous coil configuration, as shown (Fig. 4). With continued deflection beyond about 0.6H, adjacent undulations contact and "bottom out" upon one another, as depicted in Fig. 4, and further growth of the bulging instability essentially ceases. Continued deflection therefore produces further compression of the body along region 16 of the force/deflection curve (Fig. 1) under conditions of uniaxial compression similar to region 14, except that further bottoming of the adjacent undulations produces an increasing effective shape factor and hence a rising instead of linear spring rate.

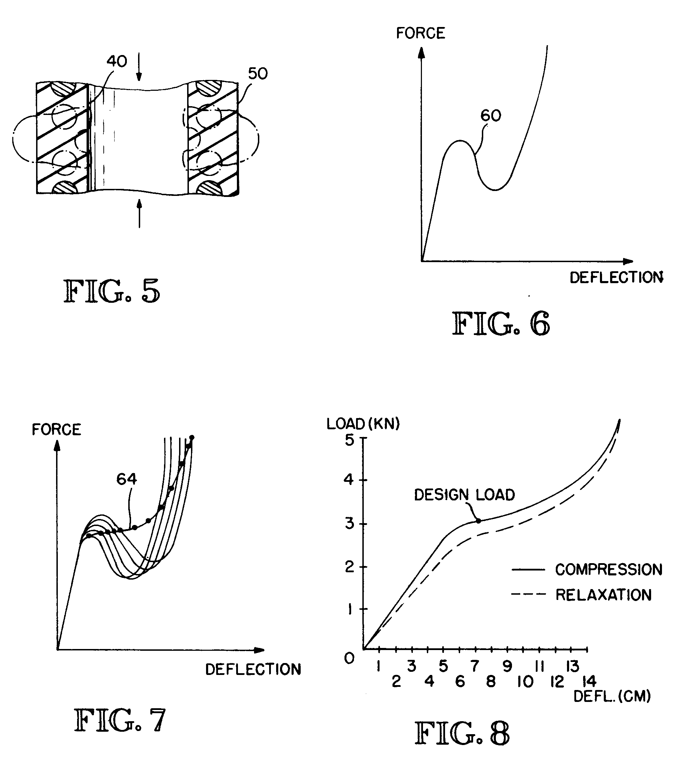

An important aspect of the present invention is that the composite spring performance is the result of the cumulative effects of the individual rubber "coils"; that is, the segments of the body between adjacent active coils of spring 12. In the single intracoil body segment depicted in Fig. 5, the localized effects of axial compression appear as both inward and outward bulging of its inner wall 40 and its outer wall 50, respectively. As depicted by broken lines, the magnitude of the inward bulging of wall 40 is substantially less than that of the outward bulging of wall 50 under axial load conditions. The inner and outer circumferential or hoop strains in and adjacent to walls 40 and 50 cause the relatively incompressible material forming the body segment to "flow" radially outward, producing the intracoil lateral bulging and the overall appearance of a rubber coil spring as illustrated in Figs. 2-4. These strains become increasingly positive with increases in axial compression, and are distributed axially along the bulging surface such that the maximum strain appears about midway between adjacent coils of spring 12 and are zero adjacent the coils themselves. The "flow" obtained as a result of this strain distribution causes the body segment to deflect momentarily in an unstable manner as if it were buckling.

This may be understood by reference to the force/deflection behavior of each of the Fig. 5 intracoil body segments or rubber "coils", first individually and then cumulatively. Individually, each rubber coil has a force deflection curve that resembles that of the composite spring, except that, as depicted in Fig. 6, the curve has a region 60 of negative slope. This is indicative of the occurrence of symmetric bulging instability within the rubber coil. Cumulatively, the bulging instability commences with the rubber coils near the middle of the body, and proceeds toward the ends of the body in alternate sequence. This is depicted in Fig. 3, in which bulging instability between coils 22 and 24 is illustrated as being the first to occur, and will be followed by similar instability occurrences between coils 21, 22 or 24, 26 as the case may be. Consequently, the rubber coils tend to reach the point of symmetric bulging instability sequentially, so the cumulative effects of coil instability occurrences appear as a plurality of the Fig. 6 force/deflection curves. As depicted in Fig. 7, the force/deflection curve for the composite spring therefore appears as a superposition of multiple Fig. 6. force/deflection curves, from which an average force/deflection curve 64 for the composite spring may be derived. In making this derivation, the negative slope regions of the individual rubber coils are offset by contrary effects of the other rubber coils that are not then manifesting this mode of deflection. Curve 64 therefore has a plateau-like region that corresponds to region 18 of the Fig. 1 curve.

Referring again to Fig. 1, this plateau-like region may occur at a predetermined load condition, as depicted by curves A, B and C. The manner in which this is accomplished is described presently. As will be apparent from Fig. 1, the slope of this region, whether positive, zero or even negative, may vary, depending upon the load condition at which the instability yielding the soft spring behavior occurs and other factors. As a consequence, the actual axial deflection force present during the occurrence of the instability may in some cases vary in accordance with the point along region 18 selected as the spring design load, or the load level from which the spring is subjected to positive and negative load inputs under the expected service conditions. The selection of this design load will of course depend upon specific application. For example, in most vehicular suspension applications, it should be desirable to select a design load at point 66 (Fig. 1), corresponding to the onset of region 18, to yield a soft ride over the maximum available range of suspension deflections. The degree of softness and the extent to which it may be desired to introduce some stiffness within or bounding this deflection range is controllable by "tuning" the spring according to further principles of this invention.

The occurrence of symmetric bulging instability is controllable so that the composite spring may be "tuned" such that its soft region 18 (Fig. 1) appears when and for the duration desired. Among the factors that lend to this control are: wall thickness and length of the body; the size, number, location, and spacing of the coils of spring 12; the properties of the material of which the body is composed; and other factors that will become apparent from the description and claims to follow.

The thickness of the body wall relative to coil spacing influences the occurrence of bulging instabilities, the thinner the wall for a given coil spacing the greater the tendency for the body to bulge. It is preferred that the bulging instability occurs in a predictable sequence in order to control the offsetting effects of the Fig. 5 individual intracoil body segments. It is further preferred that the bulging instability occurs first at or near the middle of the body and progress toward its ends from there. To accomplish this end, the body wall should be thinner at the middle of the body and become progressively thicker proceeding toward its ends. It is further preferred that the bulging instability protrudes outwardly between the spring coils, rather than inward to prevent or minimize undesirable surface stresses. To maximize the tendency toward such outward bulging, spring 12 should be embedded within body 10 nearer wall 40.

The number of active coils, coil diameter, and length of the body all are additional stability factors ("Active" coils mean all but the end coils, which constitute "inactive" coils. As depicted in Fig. 2, the active coils are designated by reference numerals 21, 22, 24 and 26 and the inactive coils are designated by reference numerals 28 and 30.) For example, the greater the number of active coils or greater the spacing between coils, the greater the tendency of the body as a whole to buckle asymmetrically under columnar loading. If the number of active coils is excessive, the body is in essence divided into so many of the Fig. 5 intracoil body that it tends to shift into asymmetric deformation conditions unpredictably. Too few active coils engendered by excessive intracoil spacing, on the other hand, promotes asymmetric buckling within the individual segments.

The wire diameter or cross-sectional size of the individual coils of spring 12 is still another stability factor. In the absence of sufficient reinforcement due to inadequate coil diameter, the body tends towards asymmetric buckling, depending upon its length, in accordance with well known principles of columnar loading. If its individual coils are too large in diameter, however, spring 12 assumes a greater proportion of the load carrying capacity as depicted by curve 20 in Fig. 1, and the beneficial effects of elastomer loading are correspondingly sacrificed. The individual coils should not be exposed and therefore preferably are of a maximum diameter that is somewhat less than the thickness of the body wall. In many practical cases, however, the individual coil diameter will be substantially less than this wall thickness.

These considerations may be expressed as follows:

(a) Stability factor (S)

$$S = \frac{(R - r)n}{2H} \qquad (1)$$

(b) Reinforcing efficiency factor (E)

$$E = \frac{(R - r)}{t}$$

Where (as depicted in Fig. 1):

H = total column height or length of body 10
n = number of active coils
r = internal radius of body 10
R = external radius of body 10
t = coil wire diameter of spring 12
(R - r) = body wall thickness

Preferably the stability factor(s) set forth in (1) above is between about 0.03 and 0.8 and most preferably is between about 0.05 and 0.2. Preferably the reinforcement efficiency factor (E) set forth in (2) above is between about .03 and 5 and most preferably is between about .05 and 3. In addition to the foregoing, unacceptable instabilities are likely to occur whenever the ratio R/2H is less than about 0.1.

It is possible to control the point along the Fig. 1 vertical force axis at which region 18 will occur, in accordance with the material properties or wall thickness of body 10, or both. For a given spring construction, an increase or decrease in the hardness or shear modulus of the body material should produce a corresponding variation in region 18 up and down along the force axis. Referring to Fig. 1, curves A, B, and C respectively represent the effects of progressive increases in shear modulus of the body material used. Likewise, for a given shear modulus or material hardness, a similar variation is attainable by increasing or decreasing the wall thickness (R-r) of body 10 (Fig. 2). As a consequence, the composite spring may be constructed with a predetermined design load at which region 18 and its associated softness will occur. Variations in regions 14, 16 and 18 may also be achieved by adjusting the number of active coils within the limits set by (1) and (2) above, or by adjusting the pitch of spring 12, or both. This is particularly advantageous in vehicular suspension applications in which it is desirable to "tune" the suspension spring elements to provide soft ride effects at a certain design load.

It presently is preferred to form body 10 of natural rubber compounded with the usual ingredients to produce an engineering grade of vulcanized rubber, although suitable synthetic elastomers or blends of natural rubber with synthetic elastomers may be used. In addition to acting as the primary load bearing material, the rubber provides attenuation of vibration or shock transmitted from the unsprung mass to the sprung mass by means of both isolation and damping. Natural frequency is reduced by decreasing the spring stiffness for a constant sprung mass or by increasing the sprung mass at constant stiffness. With the rubber coil spring of the present invention, the static and dynamic stiffness at design load is low and the natural frequency is also low, with corresponding good vibration attenuation. The rubber coil spring provides increasingly effective isolation of the sprung mass from disturbances applied at frequencies above the natural frequency of the spring/mass system, such that, as its resilience is increased, vibration attenuation is reduced. The rubber coil spring has the further advantages of being much less susceptible to the transmission of higher order harmonics than an all-metal spring, providing inherent damping that, in most practical applications, is substantially greater than that of an all-metal spring and reducing the effects of any resonance conditions that occur when a disturbing frequency at the natural frequency of the spring/mass system is encountered.

It is a well known consequence of increasing the inherent damping of the rubber compound that the "set" remaining after the removal of a compression load will increase, as will the creep under load. These effects could lead in a particular application to a gradual reduction in the length of the spring and hence in the height of the sprung mass; for example, they could affect bumper height in certain vehicle suspension applications. These effects may be controlled and kept within acceptable limits, however, by precompressing the rubber coil spring prior to installation. It is well known that physical creep rates in rubber are approximately constant with the logarithm of time typically involved with most practical vehicle suspension applications. Thus, the effects of creep may be minimized or eliminated simply by providing precompression or prestressing of a rubber coil spring unit for a period of time calculated to compensate for the amount of creep anticipated for the service life of the spring.

It presently is preferred to use the coil spring 12 as the reinforcement between which the localized bulging instability is formed, and to both embed the spring in and bond it to the rubber forming the body 10. Any suitable rubber bonding agent may be used to accomplish this. It will be recognized, however, that other types or forms of hoop-like restraints such as tire cord or fibers arranged in a spiral pattern generally could be used in place of or in combination with spring 12. Another possible construction is to bond separate rings together in a stacked relationship, with appropriate dividers bonded between them to promote lateral bulging. Neither these rings nor body 10 need be of circular transverse cross section, and could be of oval, multi-flat sided or other cross-sections that yield acceptable deformation behavior in accordance with the general principles of this invention. The spring 12 itself preferably is of metallic composition, although it could be formed of reinforced fibers, plastic or other nonmetallic compositions having suitable structural properties. Likewise, it may not always be necessary to bond the spring to the rubber, or to embed it completely within the body wall, or both, provided the frictional and other mechanical and thermal effects associated with these variations in construction produce satisfactory results.

The rubber coil spring as illustrated and described thus far is intended for axial columnar loading. As depicted in Fig. 1, the ends of body 10 are planar and transverse to its longitudinal axis. This composite spring therefore is suitable for axial columnar loading between parallel platens as shown in Fig. 70 and 72. It may, however, be adapted easily for loading by non-parallel platens and even by one or more pivoted platens, as may be encountered for example in certain automotive suspension involving pivotal A-arms or yokes. In these applications, the ends of the body may be formed at angles to its longitudinal axis, or the platens may be angled correspondingly, or both, provided the resultant force vector is along the longitudinal axis. This could accommodate the swinging motion of the sprung or unsprung mass, to the extent required to achieve the controlled symmetric bulging instabilities described earlier. It may also easily be adapted for use with non-planar ends; for example, with spring ends cut squre rather than ground flat, producing a step like end to the RSC which can locate into a suitable or fixture.

To illustrate the foregoing principles of this invention, but not by way of limitation, the following example is disclosed.

EXAMPLE

A rubber coil spring generally similar to that illustrated in Fig. 2, in which internal radius (r) is 41mm, outer radius (R) is 55mm, unrestrained length (H) of 300mm, five active coils, and formulated of natural rubber of 50 IRHD. The force/deflection curve and design load for this spring is depicted in Fig. 8. This spring should yield generally "soft" ride characteristics in a vehicle suspension system.

**Claims**

1. A composite spring having an elongated, generally tubular, elastomeric body with an outer wall (50) having a generally straight sided longitudinal profile and a matching inner surface (40) under zero columnar deflection, and a coil spring (21) embedded in said body between said outer wall (50) and said inner surface (40), but closer to said inner wall than to said outer wall, for controlling compressive deformation of said body, said composite spring being characterized by a force vs. deflection curve with a first constant rate region (14) which persists for about the initial 20% of the columnar deflection, a rising rate region (16) which persists for about the last 40% of the columnar deflection, and an intermediate plateau region (18), said plateau region (18) persisting for a substantial portion of said columnar deflection as said spring bulges through the occurrence of a series of symmetric bulging instabilities at a plurality of locations spaced apart along the length of said body under a predetermined axial load condition, and wherein:

    S     the stability factor of the spring;
    E     the reinforcing efficiency factor of the spring;
    H     the total axial length of said body;
    n     the total number of coils of said coil spring (21);
    r     the internal radius of said body;
    R     the external radius of the body;
    (R-r)     the wall thickness of the body; and
    t     the wire diameter of the coils of the coil spring;

    are such that

$$\frac{(R-r)n}{2H}$$

is between 0.05 and 0.8 = S and such that

$$\frac{(R-r)}{t} =$$

is between 0.05 and 3 = E.

2. The composite spring of claim 1 further characterized in that said spring (21) is located closer to said inner wall (40) than to said outer wall (50) to facilitate the bulging of said outer wall (50) laterally upon axial compression of said spring.

3. The spring of claim 1, further characterized in that the ratio of R/2H is less than about 0.1.

4. The spring of claim 1, further characterized in that said coil spring (21) is bonded to said body.

5. The spring of any one of the preceding claims further characterized in that said body is composed of a material having a hardness selected in relation to said predetermined load condition.

6. The spring of any one of the preceding claims further characterized in that said body is composed of a natural rubber compound.

7. The spring of claim 6 further characterized in that said compound is precompressed.

8. The spring of claim 6 or 7 further characterized in that the ends of said body are constructed and arranged with respect to the direction of force application.

9. The spring of claim 4, further characterized in that said body has an outer surface (50) that is essentially cylindrical in form in its unloaded condition and is essentially of continuous coil form in its fully loaded conditions; said body and said coil spring (21) being so constructed and arranged that, under a predetermined axial load condition, said outer surface (50) bulges outwardly between adjacent coils of said coil spring in an unstable but symmetric manner commencing adjacent coils near the middle of said body and proceeding in sequence through adjacent coils toward the ends of said body until assuming said continuous coil form.

10. The spring of claim 9, further characterized in that said body is composed of a natural rubber compound.

11. The spring of claim 1, further characterized in that said body comprises a plurality of individual spring segments acting together along a common axis, said segments being simultaneously compressible but momentarily undergoing unstable compression to yield cumulative soft spring behavior at said predetermined load condition.

12. The spring of claim 11, further characterized in that said segments undergo unstable compression in a sequence selected to provide said soft spring behavior.

13. The spring of claim 1 wherein said body has first and second longitudinal ends and substantially concentric inner and outer wall surfaces extending between said first and second ends, said inner and outer wall surfaces defining therebetween a body having a minimum thickness at a longitudinal intermediate position and having a progressively greater thickness proceeding toward each of said first and second ends under zero columnar deflection.

14. The spring of claim 1 wherein said body has a wall thickness at a first location along its length which is less than its wall thickness at another location spaced from said first location.

15. The spring of claim 1, wherein control means comprise means fixed to said body at intervals along its length restraining it against lateral bulging under axial compression such that said body undergoes localized symmetric bulging instability between these intervals under said predetermined axial load condition.

16. The spring of claim 1, wherein said body comprises a plurality of individual spring segments acting together along a common axis, said segments being simultaneously compressible but momentarily undergoing unstable compression to yield cumulative soft spring behaivor at said predetermined load condition.

**Revendications**

1. Ressort composite ayant un corps élastomère allongé de forme générale tubulaire, ayant une paroi externe (50) de profil longitudinal rectiligne de façon générale et une surface interne correspondante (40) pour un fléchissement colonnaire nul, et un ressort hélicoïdal (21) enrobé dans le corps entre la paroi externe (50) et la paroi interne (40), mais plus près de la paroi interne que de la paroi externe, afin que la déformation du corps par compression soit réduite, le ressort composite étant caractérisé par une courbe force-fléchissement ayant une première région (14) de pente constante qui persiste sur la partie initiale de 20 % environ du fléchissement colonnaire, une région à pente croissante (16) qui persiste pendant la dernière partie d'environ 40 % du fléchissement colonnaire, et une région intermédiaire (18) de palier, cette région de palier (18) persistant sur une partie importante du fléchissement colonnaire lorsque le ressort présente un bombement par apparition d'une série d'instabilités de bombement symétrique à plusieurs emplacements espacés sur la longueur du corps dans une condition prédéterminée de charge axiale, et dans lequel

S, étant le facteur de stabilité du ressort,

E, le facteur de rendement de renforcement du ressort,

H, la longueur axiale totale du corps,

n, le nombre total de spires du ressort hélicoïdal (21),

r, le rayon interne du corps,

R, le rayon externe du corps,

(R - r), l'épaisseur de paroi du corps, et

t, le diamètre du fil des spires du ressort hélicoïdal, étant tels que

$[(R - r)n]/2H$ est égal à S et est compris entre 0,05 et 0,8, et

$(R - r)/t$ est égal à E et est compris entre 0,05 et 3.

2. Ressort composite selon la revendication 1, caractérisé en outre en ce que le ressort (21) est placé plus près de la paroi interne (40) que de la paroi externe (50) afin qu'il facilite le bombement de la paroi externe (50) en direction latérale lors d'une compression axiale du ressort.

3. Ressort selon la revendication 1, caractérisé en outre en ce que le rapport R/2H est inférieur à 0,1 environ.

4. Ressort selon la revendication 1, caractérisé en outre en ce que le ressort hélicoïdal (21) est collé au corps.

5. Ressort selon l'une quelconque des revendications précédentes, caractérisé en outre en ce que le corps est composé d'un matériau ayant une dureté choisie en fonction de la condition prédéterminée de charge.

6. Ressort selon l'une quelconque des revendications précédentes, caractérisé en outre en ce que le corps est composé d'une composition à base de caoutchouc naturel.

7. Ressort selon la revendication 6, caractérisé en ce que la composition a subi une compression préalable.

8. Ressort selon la revendication 6 ou 7, caractérisé en outre en ce que les extrémités du corps ont une construction et une disposition déterminées par rapport à la direction d'application des forces.

9. Ressort selon la revendication 4, caractérisé en outre en ce que le corps a une surface externe (50) qui a une forme essentiellement cylindrique à l'état sans charge et a une forme d'hélice essentiellement continue à pleine charge, le corps et le ressort hélicoïdal (21) ayant une construction et une disposition telles que, dans une condition prédéterminée de charge axiale, la surface externe (50) présente un bombement vers l'extérieur entre les spires adjacentes du ressort hélicoïdal d'une manière instable mais symétrique, à partir des spires adjacentes proches du milieu du corps et progressivement par l'intermédiaire des spires adjacentes vers les extrémités du corps jusqu'à ce que la forme en hélice continue soit prise.

10. Ressort selon la revendication 9, caractérisé en ce que le corps est composé d'une composition de caoutchouc naturel.

11. Ressort selon la revendication 1, caractérisé en ce que le corps comprend plusieurs segments individuels de ressort agissant ensemble le long d'un axe commun, les segments étant compressibles simultanément mais subissant temporairement une compression instable donnant un comportement cumulé de ressort mou dans la condition prédéterminée de charge.

12. Ressort selon la revendication 11, caractérisé en ce que Tes segments présentent une compression instable successivement d'une manière choisie de manière que le comportement soit celui d'un ressort mou.

13. Ressort selon la revendication 1, dans lequel le corps a une première et une seconde extrémité longitudinale et des surfaces de paroi interne et externe pratiquement concentriques disposées entre la première et la seconde extrémité, les surfaces interne et externe de paroi délimitant entre elles un corps ayant une épaisseur minimale dans une partie longitudinale intermédiaire et ayant une épaisseur qui augmente progressivement vers chacune des première et seconde extrémités, pour un fléchissement colonnaire nul.

14. Ressort selon la revendication 1, dans lequel le corps a une épaisseur de paroi, à un premier emplacement suivant sa longueur, qui est inférieure à son épaisseur de paroi à un autre emplacement distant du premier emplacement.

15. Ressort selon la revendication 1, dans lequel le dispositif de commande comprend un dispositif fixé au corps à certains intervalles sur sa longueur et empêchant son bombement latéral sous l'action d'une compression axiale, si bien que le corps présente une instabilité localisée par bombement symétrique entre ces intervalles, dans la condition prédéterminée de charge axiale.

16. Ressort selon la revendication 1, dans lequel le corps comprend plusieurs segments individuels de ressort agissant ensemble suivant un axe commun, les segments étant compressibles simultanément mais présentant temporairement une compression instable donnant un comportement cumulé de ressort mou dans la condition prédéterminée de charge.

**Patentansprüche**

1. Verbundfeder mit einem langgestreckten, allgemein rohrförmigen, elastomeren Körper, der eine Außenwand (50) mit einem allgemein geradseitigen Längsprofil und eine dieser bei einer Säulenauslenkung Null angepaßten Innenwandung (40) besitzt, und mit einer in dem Körper zwischen der Außenwand (50) und der Innenwandung (40) eingebettete, näher bei der Innenwandung als bei der Außenwand angeordnete Schraubenfeder (21) zur Steuerung der Druckverformung des Körpers, wobei diese Verbundfeder dadurch gekennzeichnet ist, daß ihre Kraft/Auslenkungskurve in einem ersten Bereich (14) eine konstante Steilheit hat, die sich über etwa die ersten 20% der Säulenauslenkung erstreckt, ferner in einem Bereich (16), der sich über etwa die letzten 40% der Säulenauslenkung erstreckt, eine zunehmende Steilheit hat, und einen mittleren Plateaubereich (18) besitzt, der sich bei einem Ausbauchen der Feder auf Grund des Auftretens einer Folge von symmetrischen, ausbauchend wirkenden Instabilitäten an einer Mehrzahl von längs des Körpers in Abständen voneinander angeordneten Stellen des unter einer vorherbestimmten Axialbelastung befindlichen Körpers über einen beträchtlichen Teil der Säulenauslenkung erstreckt, wobei

| | |
|---|---|
| S | der Stabilitätsfaktor der Feder; |
| E | der Verstärkungswirkungsgradfaktor der Feder; |
| H | die Gesamtaxiallänge des Körpers; |
| n | die Gesamtwindungszahl der Schraubenfeder (21); |
| r | der Innenradius des Körpers; |
| R | der Außenradius des Körpers; |
| (R-r) | die Wandstärke des Körpers; und |
| t | der Drahtdurchmesser der Windungen der Schraubenfeder; |

so gewählt sind, daß

$$\frac{(R-r)\,n}{2H}$$

zwischen 0,05 und 0,8 = S ist und daß

$$\frac{(R-r)}{t}$$

zwischen 0,05 und 3 = E ist.

2. Verbundfeder nach Anspruch 1, dadurch gekennzeichnet, daß die Feder (21) näher bei der Innenwandung (40) als bei der Außenwand (50) angeordnet ist, um bei einem axialen Zusammendrücken der Feder das seitwärtsgerichtete Ausbauchen der Außenwand (50) zu erleichtern.

3. Feder nach Anspruch 1, dadurch gekennzeichnet, daß das Verhältnis R/2H kleiner ist als etwa 0,1.

4. Feder nach Anspruch 1, dadurch gekennzeichnet, daß die Schraubenfeder (21) mit dem Körper stoffschlüssig verbunden ist.

5. Feder nach einem der vorhergehenden Ansprüche, dadurch gekennzeichnet, daß der Körper aus einem Werkstoff besteht, der eine in Bezug auf den genannten Belastungszustand ausgewählte Härte hat.

6. Feder nach einem der vorhergehenden Ansprüche, dadurch gekennzeichnet, daß der Körper aus einer Naturkautschukmischung besteht.

7. Feder nach Anspruch 6, dadurch gekennzeichnet, daß die genannte Mischung unter einer Druckvorspannung steht.

8. Feder nach Anspruch 6 oder 7, dadurch gekennzeichnet, daß die Enden des Körpers im Hinblick auf die Richtung der Krafteinwirkung ausgebildet und angeordnet sind.

9. Feder nach Anspruch 4, dadurch gekennzeichnet, daß der Körper eine Außenwandung (50) hat, die im unbelasteten Zustand im wesentlichen zylindrisch ist und im vollbelasteten Zustand im wesentlichen die Form einer durchgehenden Wendel hat und daß der Körper und die Schraubenfeder (21) so ausgebildet und angeordnet sind, daß unter einer vorherbestimmten Axialbelastung die sich genannte Außenwandung (50) zwischen einander benachbarten Windungen der Schraubenfeder an einander benachbarten Windungen in der Mitte des Körpers beginnend und über einander benachbarte Windungen bis zu den Enden des Körpers fortschreitend instabil, aber symmetrisch ausbaucht, bis sie die Form der durchgehenden Wendel angenommen hat.

10. Feder nach Anspruch 9, dadurch gekennzeichnet, daß der Körper aus einer Naturkautschukmischung besteht.

11. Feder nach Anspruch 1, dadurch gekennzeichnet, daß der Körper eine Mehrzahl von einzelnen Federsegmenten besitzt, die längs einer gemeinsamen Achse zusammenwirken und die gleichzeitig zusammendrückbar sind und aber unter der vorherbestimmten Belastung eine derartige momentane Kompression erfahren, daß insgesamt das Verhalten einer weichen Feder erhalten wird.

12. Feder nach Anspruch 11, dadurch gekennzeichnet, daß die Segmente in einer solchen Reihenfolge eine instabile Kompression erfahren, daß das Verhalten einer weichen Feder erzielt wird.

13. Feder nach Anspruch 1, dadurch gekennzeichnet, daß der Körper ein erstes und ein zweites Längsende hat und daß er eine Innenwandung und eine Außenwandung hat, die im wesentlichen konzentrisch sind und sich zwischen dem ersten und dem zweiten Ende erstrecken und einen zwischen ihnen angeordneten Körper begrenzen, dessen Dicke bei der Säulenauslenkung Null an einer zwischen seinen Enden gelegenen Längsstelle am kleinsten ist und von dort zu dem ersten und dem zweiten Ende hin fortschreitend zunimmt.

14. Feder nach Anspruch 1, dadurch gekennzeichnet, daß der Körper an einer ersten Stelle seiner Länge eine kleinere Wandstärke hat als an einer im Abstand von dieser ersten Stelle gelegenen, anderen Stelle.

15. Feder nach Anspruch 1, dadurch gekennzeichnet, daß Steuerungsmittel Mittel umfassen, die an dem Körper in Längsabständen voneinander befestigt sind und einem seitwärtsgerichteten Ausbauchen des Körpers unter axialer Druckbelastung derart entgegenwirken, daß der Körper unter der vorherbestimmten Axialbelastung ein zu einem örtlichen symmetrischen Ausbauchen führendes, instabiles Verhalten zeigt.

16. Feder nach Anspruch 1, dadurch gekennzeichnet, daß der Körper eine Mehrzahl von einzelnen Federsegmenten besitzt, die längs einer gemeinsamen Achse zusammenwirken und die gleichzeitig zusammendrückbar sind und aber unter der vorherbestimmten Belastung eine derartige momentane Kompression erfahren, daß insgesamt das Verhalten einer weichen Feder erhalten wird.

FIG. 1

FORCE

LINEAR
REGION

PLATEAU
REGION

RISING RATE
REGION

-C
16

18
66

18
66

14

18
66

20

0.2

0.6

DEFLECTION

-B
16

-A
16

FIG. 2

70

28
21
12
22
10
24
26
30

H

72

r

R

FIG. 3

70
28
21
22
24
26
30
72

19

FIG. 4

70
28
21
22
24
26
30

19

72

FIG. 5

FIG. 6

FIG. 7

FIG. 8